# EUROPEAN PATENT APPLICATION

(11) **EP 4 517 552 A1**
(43) Date of publication of application: **05.03.2025**
(21) Application number: 23306457.5
(22) Date of filing: 01.09.2023
(51) Int. Cl.: G06F 16/25

(54) **DATA CONTEXTUALIZATION**

(71) Applicant: Schneider Electric Industries SAS, 92500 Rueil Malmaison (FR)
(72) Inventor: S V, Shreyas, 571401 Mandya (IN); MORAND, Denis, 06390 Châteauneuf-Villevieille (FR); PATRI, Michael, 63741 Aschaffenburg (DE)
(74) Representative: Schneider Electric

(57) **Abstract**

An apparatus linked to a generic database (GDB) storing generic data relating to generic objects and to a custom database (CDB) storing custom data relating to custom objects, wherein the generic data are accessible from a client application (CA) and the custom data are not accessible from the client application, comprises:
a collecting module (COL) configured to access a generic node comprising a generic attribute and an associated generic value included in the generic data relating to a generic object stored in the generic database and to access a custom node comprising a custom attribute and an associated custom value included in the custom data relating to a custom object stored in the custom database,
a binding module (BIN) configured to generate a triplet comprising a generic reference of the generic object and a custom reference of the custom object and a relationship between the generic object and the custom object, when a relationship is determined between the generic object and the custom object,
the binding module (BIN) configured to store the triplet in a persistent memory of the virtual database (VDB),
an access module (ACC) configured to read the triplet in the virtual database and to give access to the client application (CA) to at least part of the generic data and to at least part of the custom data by means of the triplet.

## Description

### FIELD OF INVENTION

The present disclosure relates generally to the processing of data sent from different data sources towards different databases with different formats without including relationships in the database and to the contextualization of such data for further analysis.

### BACKGROUND

control systems are employed for controlling operation of a wide variety of systems, including processes, machines, etc., and are typically adaptable to different control applications through configuration and interconnection of multiple control system components or devices, such as control modules, Input/Output (I/O) modules, I/O devices, etc. Existing control systems typically include a processor running or executing a control program to interact with an I/O system (e.g., typically one or more I/O modules or devices) to receive system information in the form of analog and/or digital inputs from field sensors and to provide outputs (analog and/or digital) to one or more actuators. Control systems are increasingly being interconnected with management information systems and/or other systems, and may be operatively connected to any number of communications networks to facilitate various business management functions such as inventory control, accounting, manufacturing control, building management, etc.

Some edge devices are located between the control level (comprising sensors, actuators, and controllers) and the cloud. Data are collected from the control level by edge devices and pushed to cloud servers for analysis. Actions are taken by the cloud servers and/or the edge devices to react on the process and/or to notify a good or a bad behavior of the process.

Data contextualization is critical for ensuring that data is accurate, relevant, and useful for decision making and other applications. Without it, there may be significant challenges in using the data effectively.

Data contextualization involves linking data to related information, such as metadata, reference data, or other data sets, to provide a broader perspective on the data and its relationship to other data. This can help to improve data quality, accuracy, and usefulness by enabling users to better understand the context in which the data was created or is used.

Today many SaaS provide support for standard data models like ISA95 or IEC61850, which alone is not sufficient. Certain use case needs extension of this standard models. For example, if there is a need for knowing material supplied upstream and to identify the defects that was caused due to material used in manufacturing certain product, it is not possible with the standard model, like ISA95. There is a need extending the standard data models with additional data models that are specific to customer use cases and difficult to be supported out of the box by any SaaS (Software-as-a-Service) provider.

Once the extension is supported, another challenge rises with data contextualization. Because there are two different data models, the standard data model and the customer specific extension, and there is no federation to link data between them to provide broader perspective of data and its relationship. Following are the key challenges in data contextualization.

Ensuring data consistency and accuracy across different data sources is difficult, with a need to link data across different sources and ensure that the same entity or object is represented consistently across all sources. This can lead to data inconsistencies and inaccuracies that can undermine the reliability and usefulness of the federated data.

Data contextualization is critical for many business processes, but they still regularly frustrate users with incorrect data, inconsistent data, and/or staleness across different data sources. First, the top problem reported by enterprise data users today is usually data quality and reliability. Contextualizing data from multiple sources can introduce a variety of data quality issues, such as missing or incomplete data, inconsistent data formats, and conflicting data values. Second, more and more business applications require contextualized data. Data that is not contextualized may not be relevant or useful for a particular use case or application, resulting in wasted resources and effort. Data that is not contextualized may be difficult to integrate with other data sources, making it challenging to create a complete picture of a situation or problem.

Applications/solutions generally will have off the shelf support for standard or proprietary data models, but if customer wants to extend the standard data model by bringing customer use case specific models, it becomes quite challenging as it is not the good architecture design to update standard models to address customer specific needs, especially in SAAS (multitenant environment) application if customer will have unique use cases.

There is therefore a need for a system allowing a client application to access data coming from different data sources and stored eventually even in different databases using different data models.

### SUMMARY

This summary is provided to introduce concepts related to the present inventive subject matter. This summary is not intended to identify essential features of the claimed subject matter nor is it intended for use in determining or limiting the scope of the claimed subject matter.

In one implementation, there is provided an apparatus linked to a generic database storing generic data relating to generic objects and to a custom database storing custom data relating to custom objects, wherein the generic data are accessible from a client application and the custom data are not accessible from the client application, the apparatus comprising:
a collecting module configured to access a generic node comprising a generic attribute and an associated generic value included in the generic data relating to a generic object stored in the generic database and to access a custom node comprising a custom attribute and an associated custom value included in the custom data relating to a custom object stored in the custom database,
a binding module configured to generate a triplet comprising a generic reference of the generic object and a custom reference of the custom object and a relationship between the generic object and the custom object, when a relationship is determined between the generic object and the custom object,
the binding module configured to store the triplet in a persistent memory of the virtual database,
an access module configured to read the triplet in the virtual database and to give access to the client application to at least part of the generic data and to at least part of the custom data by means of the triplet.

Advantageously, the code of the client application is not changed after the deployment of the custom database storing custom data and the client application can now access to custom data stored in the custom database. It provides an efficient contextualization of data, for example allowing generic data sent by an existing sensor and stored in the generic database to be linked by the client application with custom data sent by a newly deployed sensor and stored in the custom database that was not accessible by the client application.

The access module enriches the client application's request, enabling it to browse the content of the generic database and the custom database without needing to know the storage locations of generic attributes or custom attributes.

In an embodiment, the generic data comprises different generic attributes and associated generic values and the custom data comprises different custom attributes and associated custom values.

In an embodiment, said generic attribute is an identifier of said one object and said custom attribute is an identifier of said another object.

In an embodiment, the generic reference allows to retrieve uniquely the generic data relating to the generic object in the generic database and the custom reference allows to retrieve uniquely custom data relating to the custom object in the custom database.

In an embodiment, the binding module generates the triplet, upon an internal event or an external event.

In an embodiment, an internal event is a time limit or a periodic time interval.

In an embodiment, an external event is a new arrival or update of generic data or custom data.

In an embodiment, the relationship is determined between the generic object and the custom object when conditions based on the generic node and on the custom node are satisfied.

In an embodiment, said conditions are based on a time limit between the time of storage of the generic data and the time of storage of the custom data.

In an embodiment, said conditions are based on other attributes included in the generic data and in the custom data.

In an embodiment, the collecting module is configured to store the generic node and the custom node in a cache module.

In an embodiment, said other attributes included in the generic data and in the custom data are stored in the cache module and are deleted once the triplet is determined.

In an embodiment, the access module receives a request from the client application comprising the generic reference and provides the custom reference to the client application.

In another implementation, there is provided a method implemented in an apparatus linked to a generic database storing generic data relating to generic objects and to a custom database storing custom data relating to custom objects, wherein the generic data are accessible from a client application and the custom data are not accessible from the client application, the method comprising:
accessing, by a collecting module, a generic node comprising a generic attribute and an associated generic value included in the generic data relating to a generic object stored in the generic database and a custom node comprising a custom attribute and an associated custom value included in the custom data relating to a custom object stored in the custom database,
generating, by a binding module, a triplet comprising a generic reference of the generic object and a custom reference of the custom object and a relationship between the generic object and the custom object, when a relationship is determined between the generic node and the custom node,
storing, by the binding module, the triplet in a persistent memory of the virtual database,
reading, by an access module, the triplet in the virtual database and giving access to the client application to at least part of the generic data and to at least part of the custom data by means of the triplet.

In another implementation there is provided a computer-readable medium having embodied thereon a computer program for allowing a client application to access data coming from different data sources and stored in different databases using different data models. Said computer program comprises instructions which carry out steps according to the method according to the invention.

### BRIEF DESCRIPTION OF THE FIGURES

The detailed description is described with reference to the accompanying figures. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:
FIG. 1 shows a schematic block diagram of a communication system for allowing a client application to access data coming from different data sources and stored in different databases using different data models according to one embodiment;
FIG. 2 is a flow diagram of a method for allowing a client application to access data coming from different data sources and stored in different databases using different data models according to one embodiment.

The same reference number represents the same element or the same type of element on all drawings.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

### DESCRIPTION OF EMBODIMENTS

The figures and the following description illustrate specific exemplary embodiments of the invention. It will thus be appreciated that those skilled in the art will be able to devise various arrangements that, although not explicitly described or shown herein, embody the principles of the invention and are included within the scope of the invention. Furthermore, any examples described herein are intended to aid in understanding the principles of the invention, and are to be construed as being without limitation to such specifically recited examples and conditions. As a result, the invention is not limited to the specific embodiments or examples described below, but by the claims and their equivalents.

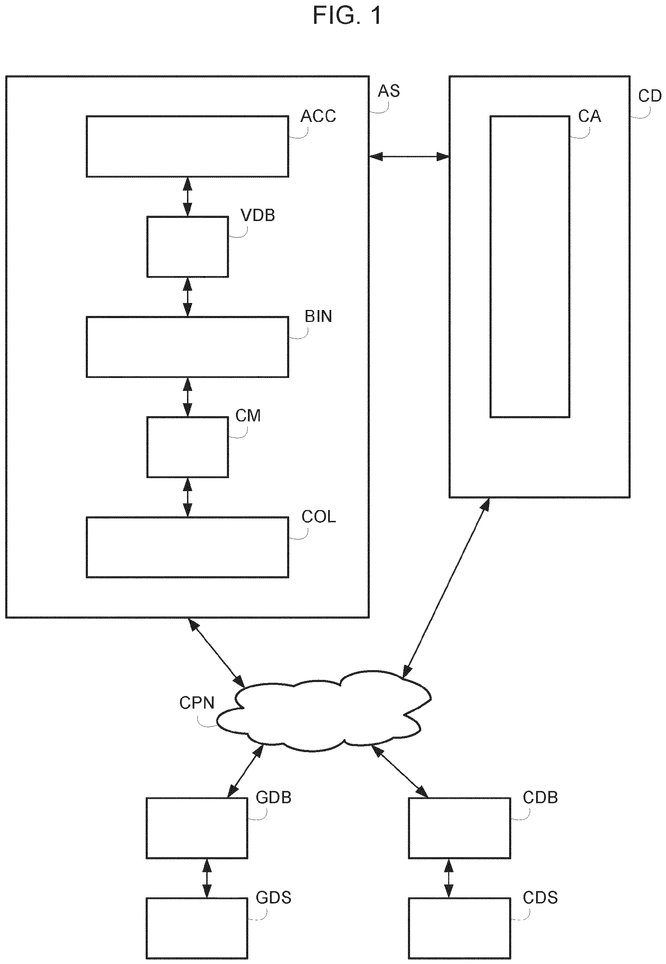

Referring to FIG. 1, a communication system comprises an application server AS, a generic data source GDS, a custom data source CDS, a generic database GDB, a custom database CDB and a client device CD.

An infrastructure, such as a plant, comprises assets, like a physical asset in real world or a cyber physical asset used in the cloud. An asset can represent a person or an object that performs a job. A physical asset can be a physical person or an equipment, for example a sensor or any kind of device like robot, motor controller, IO module, switch or router etc...

Furthermore, an object is a virtual representation of a physical asset presenting a set of attributes, including standard and asset-type specific (e.g. location, date of deployment). Some mandatory attributes can be a unique name and at least one class of equipment (e.g. Pump, motor, controller ...). For example, the attributes of an object can include the following ones as it will be seen hereinafter: an asset identifier, an asset name, the engineering domain the asset belongs to, an URL (Universal Resource Location) pointing to a standard definition of the object, a serial number.

In addition to attributes, each object can have at least one object relationship with at least one other object. It is assumed that there exist different kinds of object relationships and all object relationships can be categorized in at least two types of object relationships: composition relationship and connection relationship. Composition relationship is pointing a sub-object from which the physical asset is mechanically composed of. Connection relationship is pointing a connected asset. Assets may be connected through various kind of connection: electrical / mechanical / network / ... In other words, it can be also assumed that the composition relationship defines a link between two assets from physical point of view and a connection relationship defines an interaction between two assets from connection point of view.

Furthermore, an object relationship between two objects can be static or temporal (that may change over time), or can be the result of a specific algorithm or of a user action.

The relationships between objects can be represented by a defined ontology based on triplets composed of subject, relation and object. The relation can be defined by a URI (Universal Resource Identifier), the subject can be an asset identifier and the object can be another asset identifier.

For example, according to the language of the defined ontology, an object relationship can be at least one of the following relations in a non-limiting way: Equals, BelongsTo, SupervisedBy.

The application server AS is connected to a cloud provider network CPN that connects the application server AS to the generic database GDB and to the custom database CDB. Each of the generic database GDB and the custom database CDB can be connected to or implemented in a cloud server that provides access to the data stored in the database for an application accessible by a customer exploiting this data.

The cloud provider network CPN may be a wired or wireless network, or a combination of wired and wireless networks, and can be associated with a packet network, for example, an IP ("Internet Protocol") high-speed network such as the Internet or an intranet, or even a company-specific private network.

The cloud provider network is for example a digital cellular radio communication network of the GPRS (General Packet Radio Service), UMTS (Universal Mobile Telecommunications System), CDMA (Code Division Multiple Access) type, LTE (Long Term Evolution) or even 5G (Fifth Generation) type.

A generic data source GDS or a custom data source CDS can be implemented in an edge device and is located between the control level of an industrial system (comprising sensors, actuators, and controllers) and the cloud. The edge device functionality and the industrial system functionality might also be merged in a single physical device. Data are collected from the control level by edge devices to be sent towards the generic database GDB or the custom database CDB via a server acting as a cloud entry point through corresponding telecommunication networks.

A generic data source GDS provides generic data that are relating to at least one generic object and that can be stored in the generic database GDB according to a generic model. A custom data source CDS provides custom data that are relating to at least one custom object and that can be stored in the custom database CDB according to a custom model.

The client device CD implements a client application CA that is able to access only the generic data stored in the generic database GDB, as the client device CD is deployed with the client application that is initially set to be compatible with the generic database GDB, with a program code taking into account the generic model used by the generic database. For example, the client application CA is able to generate the right query to access the different content of generic data stored in the generic database GDB. Besides, the client application is not able to interrogate directly the custom database to retrieve content of custom data.

The application server AS comprises a collecting module COL, a cache module CM, a binding module BIN, a virtual database VDB and an access module ACC.

The collecting module COL is configured to collect part of data stored in the generic database CDB and in the custom database CDB. The collecting module COL can be triggered upon an event, that can be external or internal, which allows to collect part of data periodically or upon configured event. The collecting module is able to retrieve an attribute and associated value of generic data stored in the generic database GDB or custom data stored in the custom database CDB and to store said attribute and associated value in the cache module CM.

More especially, the collecting module COL is configured to access or extract a generic node comprising a generic attribute and an associated generic value included in generic data relating to one generic object stored in the generic database GDB and also to access or extract a custom node comprising a custom attribute and an associated custom value included in the custom data relating to a custom object stored in the custom database CDB.

For example, an internal event may correspond to a time limit or a periodic time interval at the end of which the collecting module is exploring the generic database GDB or the custom database CDB.

For example, an external event may correspond to a new arrival or update of generic data stored in the generic database GDB or custom data stored in the custom database CDB.

The collecting module COL is provided with adequate custom requests to retrieve custom data stored in the custom database. In other words, the schema or model used by the custom database (e.g. how to read/write data in the database) is known by the collecting module COL that is able to retrieve data stored in the custom database.

The collecting module COL is provided with rules comprising a list of attributes that are related to different objects and that need to be searched and retrieved from generic data and from custom data. For example, the collecting module is searching only some types of attributes relating to an identifier of an object. These attributes to be searched are selected with respect to at least one object and at least one another object that have an relationship between them.

Initially, with the deployment of the custom database CDB, the rules describe a list comprising the objects that may have a relation and thus it is defined the relationships between these objects. The relationships can be represented by a defined ontology based on triplets composed of subject, relation and object. The subject can be an object attribute (of one object) and the object can be another object attribute (of another object).

Rules allow to automatically generate triplets from attributes to be retrieved from the generic database GDB and the custom database CDB. The type of relationship defines the logic to be executed by the binding module BIN.

The collecting module and the binding module are provided with the object list and the rules after deployment of the custom database CDB.

Depending on the structure of the database, an attribute of an object may be represented under different forms. For example, in a non-relational database, an attribute may correspond to a given key and the value of the attribute may correspond to the value of the key-value pair associated with said given key. Furthermore, an object may be associated with a reference that may be an attribute, an external characteristic or a key for unique identification of the object. In non-limiting examples, a reference is a key entry in a database structure or a line number in a table.

The cache module CM forms a buffer storage between the collecting module COL and the binding module BIN. Some data stored in the cache module CM can be kept during a defined time interval, for example depending on the rules.

The collecting module COL is configured to inform the binding module BIN that an attribute and associated value extracted from the generic database GDB or from the custom database CDB has been stored in the cache module CM. In one embodiment, the binding module BIN is triggered upon an internal event or an external event as explained before, to command the actions of the collecting module COL.

The binding module BIN is configured to generate a triplet comprising a generic reference related to a generic object, a custom reference related to a custom object and a relationship between the generic object and the custom object, and to store the triplet in a virtual database VDB. The virtual database VDB may include any kind of persistent memory storing the generated triplet. The virtual database VDB may store any desired information arranged in any fashion (e.g., tables, hierarchical, relations, objects, etc.), and may store additional information such as metadata.

More especially, such a triplet is generated when the relationship between the generic object and the custom object is determined and validated.

The rules may give conditions to be satisfied by a generic object and by a custom object to validate a relationship between said generic object and said custom object. These conditions may be based on the extracted generic node from generic data related to said generic object and on the extracted custom node from custom data related to said custom object, for example using a comparison of the value of the generic attribute with the value of the custom attribute.

In one embodiment, these conditions may be based also on other attributes included in the generic data and in the custom data. The rules indicate said other attributes and associated values to be searched in the databases and stored in the cache module CM, allowing the binding module to compare said associated values.

These conditions may further be based on temporal properties, like a time limit between the time of storage of the generic data related to said generic object and the time of storage of the custom data related to said custom object. For example, a first sensor corresponds to a first object and a second sensor corresponds to a second object, both sensors being linked to a same machine and the data sent by the first and second sensors need to be analyzed together. The first sensor sends generic data to the generic database and the second sensor sends custom data to the custom database. To be consistent, the generic data and the custom data should be respectively stored in the generic database and the custom database during a defined time interval, otherwise the correlation between the generic data and the custom data becomes useless.

The access module ACC is configured to read the triplet in a virtual database VDB and to give access to the client application CA to at least part of the generic data relating to the generic node and to at least part of the custom data relating to the custom node. The virtual database VDB can be seen as a single federated database (even not physically existing) accessing both generic data and custom data in a contextualized manner thanks to the triplets describing the relations.

As explained before, the triplet comprises a generic reference, a custom reference and a relationship between the generic object and the custom object. In one embodiment, the generic reference may comprise a key-value pair (as generic attribute) or any kind of reference equivalent allowing to retrieve uniquely the generic data relating to the generic object in the generic database and similarly the custom reference may comprise a key-value pair (as custom attribute) or any kind of reference equivalent allowing to retrieve uniquely custom data relating to the custom object in the custom database.

The access module ACC forms a Data composition layer that sits between the client application and multiple databases. The composition layer is responsible for aggregating data from multiple databases and presenting it to the client application in a unified way. This layer allows client applications to interact with multiple databases with a single request, reducing the number of data queries and simplifying the integration process. The composition layer will also perform additional processing on the data before presenting it to the client application, such as transformation, filtering, or sorting.

The access module ACC can include a query planner that generates a query execution plan, which specifies the sequence of operations that the system will perform to retrieve the requested data. The goal of the query planner is to choose the most efficient execution plan by considering factors such as query complexity, available indexes, and data distribution.

In one illustrative example, a customer has adopted the ISA 95 standard for storing generic data relating to different objects of an entity in a generic database. When the customer wants to extend the standard data model (ISA 95), it may add customer specific models to store custom data in a custom database. To better understand issues relating to one or more objects, the generic data and the custom data using two different data models need to be contextualized but the customer will have its own merge of data models which won't match anymore with standard ISA 95 model. The application server is able to create a triplet linking generic data and custom data, thus replacing a common merge of data models getting better insights of generic data and custom data and allowing for example a better correlation between generic data and custom data pertaining to issues relating to one or more objects.

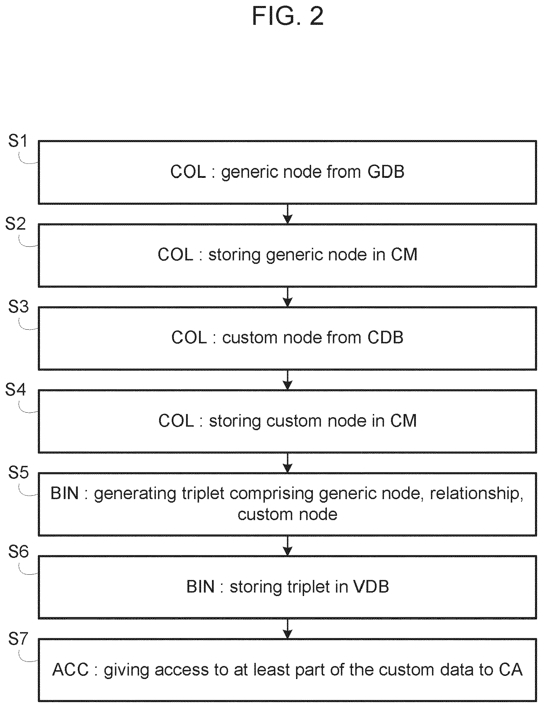

With reference to FIG. 2, a method for allowing a client application to access data coming from different data sources and stored in different databases using different data models according to one embodiment of the invention comprises steps S1 to S7.

Initially, the collecting module COL is provided with rules that define at least one generic attribute of a generic object that should be stored in the generic database and at least one custom attribute of a custom object that should be stored in the custom database, said generic object and said custom object having a relationship. In one embodiment, said generic attribute is an identifier of said generic object and said custom attribute is an identifier of said custom object.

Furthermore, the communication device CD implements a client application CA able to communicate with the access module, being operative with the data model used by the generic database GDB but not operative with the data model used by the custom database GDB.

In step S1, the collecting module COL analyzes the generic database GDB based on the object list. The collecting module COL may scan the generic database regularly or retrieves notifications each time new data is stored, or data is updated.

Once a generic attribute related to a generic object is found in the generic database GDB, or once the collection module COL is notified to a generic attribute, the collecting module COL accesses or extracts the generic attribute and an associated generic value to form a generic node.

In optional step S2, the collector module COL stores the generic node comprising the extracted generic attribute and the associated extracted generic value in the cache module CM.

In step S3, the collecting module COL analyzes the custom database based on the object list. The collecting module COL may scan the custom database regularly or retrieves notifications each time new data is stored, or data is updated.

Once a custom attribute related to one another object is found in the custom database CDB, or once the collection module COL is notified to a custom attribute, the collecting module COL accesses or extracts the custom attribute and an associated custom value to form a custom node.

In optional step S4, the collector module COL stores the custom node comprising the extracted custom attribute and the associated extracted custom value in the cache module CM.

In step S5, the binding module BIN generates a triplet comprising a generic reference of the generic object and a custom reference of the custom object and a relationship between the generic object and the custom object, when a relationship is determined between the nodes.

To that end, the binding module BIN is aware of the storage of the generic node and the custom node in the cache module CM for high frequent data access and of the storage in the generic database GDB and the custom database CDB for low frequent data access, and depending on the rules applying to the generic node and the custom node the binding module BIN checks if the conditions are satisfied to validate the object relationship between the generic object and the custom object.

In step S6, the binding module BIN stores the generated triplet in the persistent memory of the virtual database VDB.

In step S7, upon request from the client application, the access module ACC gives access to the client application to at least part of the generic data and to at least part of the custom data by means of the triplet. For example, the request of the client application may comprise the generic reference related to a generic object, and the access module provides the custom reference to the client application or provides the custom node and other attributes related to said custom object to the client application.

For giving access to the client application to at least part of the generic data and to at least part of the custom, the access module ACC uses the virtual database which leverage the following components: binding relation storage (triplets) that stores the specific binding between object instances (references) and query possibilities for querying contextualized data, which compose the data from two or more data models based on the triplet defined relations. Based on the queries, it looks like all composed data are stored in a single database.

In a first example, generic data are related to a first equipment as a first object and custom data are related to a second equipment as a second object. The generic data contains the following attributes: identifier, serial number, firmware version, software version. The custom data contains the following attributes: Id, SN, geolocation, measurement. At least the generic attributes "identifier" and "serial number", and the custom attributes "Id" and "SN" are stored in the cache module. More especially the generic node comprising the generic attribute "identifier" and an associated generic value "X" is stored in the cache module, as well as the custom node comprising the custom attribute "Id" and an associated generic value "1" is stored in the cache module. An rule can be expressed as: IF (two objects have same serial number) THEN (create relationship EQUALS). If the generic attribute "serial number" has the same value as the custom attribute "SN", the conditions are satisfied and the relationship "EQUALS" is determined. Thus the binding module can generate a triplet comprising the generic node, the custom node and the relationship "EQUALS" between the generic node and the custom node: (Id(1), EQUALS, Identifier(X)). This relationship is considered static as it will not change over time.

In a second example, generic data are related to a company as a first object and custom data are related to a user as a second object. The generic data contains the following attributes: identifier, name, address, contact. The custom data contains the following attributes: Id, Name, Description, Address, Email. At least the generic attributes "identifier" and "address", and the custom attributes "Id" and "Address" are stored in the cache module. More especially the generic node comprising the generic attribute "identifier" and an associated generic value "0" is stored in the cache module, as well as the custom node comprising the custom attribute "Id" and an associated generic value "A" is stored in the cache module. An rule can be expressed as: IF (user address == company address) THEN (create relationship BELONGS TO). If the generic attribute "address" has the same value as the custom attribute "Address", the conditions are satisfied and the relationship "BELONGS TO" is determined. Thus the binding module can generate a triplet comprising the generic node, the custom node and the relationship "BELONGS TO" between the generic node and the custom node: (Id(A), BELONGS TO, Identifier(1)). This relationship is considered semi static as it might change over time.

In a third example, generic data are related to a team "Shift" as a first object and custom data are related to a production lot "ProductionLot" as a second object. The generic data contains the following attributes: Identifier, startTime, stopTime, ListOfPeople, ListOflncidents. The custom data contains the following attributes: Id, Name, Description, Batch, StartTime, StopTime. At least the generic attributes "identifier", "startTime" and "stopTime", and the custom attributes "Id", StartTime" and "StopTime" are stored in the cache module. More especially the generic node comprising the generic attribute "identifier" and an associated generic value "X" is stored in the cache module, as well as the custom node comprising the custom attribute "Id" and an associated generic value "P" is stored in the cache module. An rule can be expressed as: IF (Shift.startTime < ProductionLot. StartTime AND Shift.stopTime > ProductionLot.StoptTime) THEN (create relationship SUPERVISED BY), meaning that the team Shift was available at the same time of production of the production lot ProductionLot. If the different values of the attributes "startTime", "stopTime" and "StartTime", "StopTime" satisfy the conditions of the rule, the relationship "SUPERVISED BY" is determined. Thus the binding module can generate a triplet comprising the generic node, the custom node and the relationship "SUPERVISED BY" between the generic node and the custom node: (Id(P), SUPERVISED BY, Identifier(X)). This relationship is considered to be based on time-synchronized activities.

Although the present invention has been described above with reference to specific embodiments, it is not intended to be limited to the specific form set forth herein. Rather, the invention is limited only by the accompanying claims and, other embodiments than the specific above are equally possible within the scope of these appended claims.

Furthermore, although exemplary embodiments have been described above in some exemplary combination of components and/or functions, it should be appreciated that, alternative embodiments may be provided by different combinations of members and/or functions without departing from the scope of the present disclosure. In addition, it is specifically contemplated that a particular feature described, either individually or as part of an embodiment, can be combined with other individually described features, or parts of other embodiments.

## Claims

1. An apparatus linked to a generic database (GDB) storing generic data relating to generic objects and to a custom database (CDB) storing custom data relating to custom objects, wherein the generic data are accessible from a client application (CA) and the custom data are not accessible from the client application, the apparatus comprising:
a collecting module (COL) configured to access a generic node comprising a generic attribute and an associated generic value included in the generic data relating to a generic object stored in the generic database and to access a custom node comprising a custom attribute and an associated custom value included in the custom data relating to a custom object stored in the custom database,
a binding module (BIN) configured to generate a triplet comprising a generic reference of the generic object and a custom reference of the custom object and a relationship between the generic object and the custom object, when a relationship is determined between the generic object and the custom object,
the binding module (BIN) configured to store the triplet in a persistent memory of the virtual database (VDB),
an access module (ACC) configured to read the triplet in the virtual database and to give access to the client application (CA) to at least part of the generic data and to at least part of the custom data by means of the triplet.

2. An apparatus according to claim 1, wherein the generic data comprises different generic attributes and associated generic values and the custom data comprises different custom attributes and associated custom values.

3. An apparatus according to claim 2, wherein said generic attribute is an identifier of said one object and said custom attribute is an identifier of said another object.

4. An apparatus according to any of previous claims, wherein the generic reference allows to retrieve uniquely the generic data relating to the generic object in the generic database and the custom reference allows to retrieve uniquely custom data relating to the custom object in the custom database.

5. An apparatus according to any of previous claims, wherein the binding module (BIN) generates the triplet, upon an internal event or an external event.

6. An apparatus according to claim 5, wherein an internal event is a time limit or a periodic time interval.

7. An apparatus according to claim 5, wherein an external event is a new arrival or update of generic data or custom data.

8. An apparatus according to any of previous claims, wherein the relationship is determined between the generic object and the custom object when conditions based on the generic node and on the custom node are satisfied.

9. An apparatus according to claim 8, wherein said conditions are based on a time limit between the time of storage of the generic data and the time of storage of the custom data.

10. An apparatus according to claim 8, wherein said conditions are based on other attributes included in the generic data and in the custom data.

11. An apparatus according to any of previous claims, wherein the collecting module (COL) is configured to store the generic node and the custom node in a cache module (CM).

12. An apparatus according to claims 10 and 11, wherein said other attributes included in the generic data and in the custom data are stored in the cache module and are deleted once the triplet is determined.

13. An apparatus according to any of previous claims, wherein the access module (ACC) receives a request from the client application comprising the generic reference and provides the custom reference to the client application.

14. A method implemented in an apparatus linked to a generic database (GDB) storing generic data relating to generic objects and to a custom database (CDB) storing custom data relating to custom objects, wherein the generic data are accessible from a client application (CA) and the custom data are not accessible from the client application, the method comprising:
accessing, by a collecting module (COL), a generic node comprising a generic attribute and an associated generic value included in the generic data relating to a generic object stored in the generic database and a custom node comprising a custom attribute and an associated custom value included in the custom data relating to a custom object stored in the custom database,
generating, by a binding module (BIN), a triplet comprising a generic reference of the generic object and a custom reference of the custom object and a relationship between the generic object and the custom object, when a relationship is determined between the generic node and the custom node,
storing, by the binding module (BIN), the triplet in a persistent memory of the virtual database (VDB),
reading, by an access module (ACC), the triplet in the virtual database and giving access to the client application (CA) to at least part of the generic data and to at least part of the custom data by means of the triplet.

15. A computer-readable medium having embodied thereon a computer program for executing a method for allowing a client application to access data coming from different data sources and stored in different databases using different data models according to claim 14.
